(19) Europäisches Patentamt
European Patent Office
Office européen des brevets

(11) Veröffentlichungsnummer: **0 492 232 B1**

(12) **EUROPÄISCHE PATENTSCHRIFT**

(45) Veröffentlichungstag der Patentschrift: **26.07.95**

(51) Int. Cl.$^{6}$: **C09B 57/14**, C09B 5/24, C09B 5/00

(21) Anmeldenummer: **91121034.2**

(22) Anmeldetag: **09.12.91**

(54) **Verfahren zur Herstellung von Benzothioxanthen-Farbstoffen.**

(30) Priorität: **24.12.90 DE 4041853**

(43) Veröffentlichungstag der Anmeldung:
**01.07.92 Patentblatt 92/27**

(45) Bekanntmachung des Hinweises auf die Patenterteilung:
**26.07.95 Patentblatt 95/30**

(84) Benannte Vertragsstaaten:
**CH DE FR GB IT LI**

(56) Entgegenhaltungen:
**DE-B- 1 293 939**
**DE-B- 2 134 517**
**FR-A- 2 145 992**

**PATENT ABSTRACTS OF JAPAN vol. 10, no. 355 (C-388)(2411) 29. November 1986**

**DYES AND PIGMENTS. Bd. 3, Nr. 1, 1982, BARKING GB Seiten 59 - 69; F. M.**

**CARLINI; C. PAFFONI; G. BOFFA: 'NEW DAYLIGHT FLUORESCENT PIGMENTS'**

(73) Patentinhaber: **CASSELLA Aktiengesellschaft**
**Hanauer Landstrasse 526**
**D-60386 Frankfurt (DE)**

(72) Erfinder: **Bauer, Wolfgang, Dr.**
**Masurenstrasse 6**
**W-6457 Maintal 3 (DE)**
Erfinder: **Grimm, Eberhard, Dr.**
**Schopenhauerstrasse 15**
**W-6050 Offenbach (DE)**
Erfinder: **Nickel, Uwe, Dr.**
**Hasselmannring 22**
**W-6380 Bad Homburg (DE)**
Erfinder: **Schrod, Manfred, Dr.**
**Gross-Gerauerstrasse 54 d**
**W-6108 Weiterstadt (DE)**
Erfinder: **Wille, Herbert, Dr.**
**Hünfelderstrasse 61**
**W-6000 Frankfurt am Main 60 (DE)**

(74) Vertreter: **Muley, Ralf, Dr.**
**Cassella AG,**
**Patentabteilung,**
**Hanauer Landstrasse 526**
**D-60386 Frankfurt (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 492 232 B1

## Beschreibung

Die vorliegende Erfindung betrifft ein Verfahren zur Herstellung von Benzothioxanthen-Farbstoffen durch Diazotierung und Cyclisierung von 3-(2'-Aminophenylthio)-benzanthronen.

Es sind bereits verschiedene Verfahren dieses Typs bekannt. So beschreibt die DE-PS 1 293 939 die Diazotierung von 3-(2'-Aminophenylthio)-benzanthronen in essig-oder mineralsaurer Lösung und die Cyclisierung des entstandenen Diazoniumsalzes in Gegenwart von Kupfersalzen oder Kupferpulver. Dieses Verfahren hat eine schlechte Raumausbeute und führt zu einer hohen Abwasserbelastung mit Kupfersalzen. Ferner fallen die Produkte dabei in stark verunreinigter Form an, so daß sie in aufwendiger Weise durch Behandlung mit organischen Lösungsmitteln gereinigt werden müssen. Dies ist mit weiteren ökologischen und ökonomischen Nachteilen verbunden.

Nach der DE-PS 2 134 517 werden 3-(2'-Aminophenylthio)-benzanthrone in tertiären Aminen bei Temperaturen von -10 °C bis 0 °C mit Nitrosylgruppen abspaltenden Verbindungen, z.B. Nitrosylschwefelsäure, umgesetzt und die so erhaltenen Diazoniumverbindungen auf 100 °C bis 115 °C erhitzt. Dieses Verfahren ist aufgrund der hohen Toxizität der Lösungsmittel Pyridin oder Pyridinbasengemischen nachteilig, so daß hohe technische Aufwendungen im Hinblick auf Lösungsmittelregeneration und Reinhaltung von Abluft und Abwasser erforderlich sind.

Die DE-PS 2 134 513 beschreibt die Umsetzung von 3-(2'-Aminophenylthio)-benzanthronen mit Nitrosylgruppen abspaltenden Verbindungen in N,N-dialkylierten Säureamiden bei Temperaturen von -10 °C bis 5 °C zu Diazoniumverbindungen und deren anschließende Cyclisierung in Gegenwart von Kupfer, Kupfersalzen oder säurebindenden Mitteln bei 115 °C. Nach diesem Verfahren werden die Produkte mit einem hohen Reinheitsgrad erhalten, jedoch liegen die Ausbeuten bezogen auf die eingesetzten Aminoverbindungen bei maximal 58 % der Theorie. Das Verfahren ist demnach aufgrund des hohen Anteils an Nebenprodukten, die das Abwasser belasten oder entsorgt werden müssen, unwirtschaftlich. Darüberhinaus wirft dieses Verfahren sicherheitstechnische Probleme auf. Beispielsweise steigt beim Erwärmen des nach Beispiel 2 der DE-PS 2 134 518 erhaltenen Diazoniumsalzes der nach der Wärmebilanzkalorimetrie bestimmte Wärmefluß der Reaktion ab 60 °C exponentiell an, so daß die sicherheitstechnische Beherrschbarkeit der Reaktion nicht mehr gewährleistet werden kann. Für die Gesamtreaktion wurde dabei eine adiabatische Temperaturerhöhung von 106,2 °C ermittelt.

Aufgabe vorliegender Erfindung ist es, Benzothioxanthen-Farbstoffe in ökologisch und ökonomisch optimaler Weise, d.h. mit möglichst geringer Umweltbelastung in hoher Ausbeute und Reinheit herzustellen.

Die Aufgabe wird gelöst durch ein Verfahren zur Herstellung von Benzothioxanthen-Farbstoffen der allgemeinen Formel I

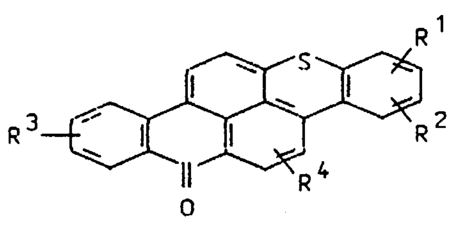

I

worin

$R^1$ und $R^2$ unabhängig voneinander Wasserstoff, $(C_1\text{-}C_2)$-Alkyl, $(C_1\text{-}C_2)$-Alkoxy oder Chlor

und

$R^3$ und $R^4$ unabhängig voneinander Wasserstoff oder Brom bedeuten, durch Diazotierung und Cyclisierung von 3-(2'-Aminophenylthio)-benzanthronen der allgemeinen Formel II

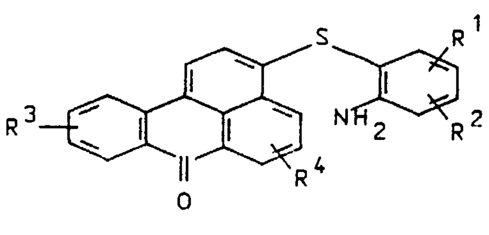

II

worin $R^1$ bis $R^4$ wie oben angegeben definiert sind, dadurch gekennzeichnet, daß Diazotierung und Cyclisierung gleichzeitig in polaren, aprotischen Lösungsmitteln in Gegenwart von Wasser und ohne Zusatz von Kupferverbindungen ausgeführt werden.

In der allgemeinen Formel I bedeuten $R^1$ bis $R^4$ bevorzugt Wasserstoff.

Bevorzugte polare, aprotische Lösungsmittel sind beispielsweise dialkylierte Säureamide wie Dimethylformamid, Dimethylacetamid, N-Methylpyrrolidon-2, N-Methylpiperidon-2 und N-Formylmorpholin, Harnstoffderivate wie Tetramethylharnstoff, Tetraethylharnstoff, 1,3-Dimethylimidazolinon-2 und 1,3-Dimethyl-3,4,5,6-tetrahydro-2(1H)-pyrimidon, Sulfoxide wie Dimethylsulfoxid, Sulfone wie Sulfolan sowie Alkylnitrile wie Acetonitril und Propionitril. Besonders bevorzugt sind N-Methylpyrrolidon-2 und Dimethylsulfoxid.

Wasser wird bevorzugt in Mengen von 0,5 bis 15 Gew.%, vorzugsweise 2 bis 10 Gew.%, bezogen auf das Lösungsmittel eingesetzt.

Die Diazotierung der Verbindungen der allgemeinen Formel II geschieht in an sich bekannter Weise, beispielsweise mit Alkalinitrit, insbesondere Natriumnitrit, in Gegenwart von Mineral-, Alkan- oder Arensulfonsäuren oder mit Nitrosylschwefelsäure, Nitrosylchlorid oder Salpetrigsäureestern wie beispielsweise Isoamylnitrit oder Salpetrigsäuremonoglykolester als Nitrosylgruppen liefernde Verbindungen.

Die Nitrosylgruppen liefernden Verbindungen werden vorteilhafterweise in einem Überschuß von 5 bis 70 Mol%, vorzugsweise 10 bis 50 Mol%, bezogen auf die Verbindung der allgemeinen Formel II eingesetzt.

Bei der Verwendung von Alkalinitrit nötige Mineralsäuren sind beispielsweise Salzsäure, Schwefelsäure und Phosphorsäure. Alkan- und Arensulfonsäuren sind beispielweise Methansulfonsäure, Ethansulfonsäure, Butansulfonsäure, Trifluormethansulfonsäure, Benzolsulfonsäure und 4-Methylbenzolsulfonsäure.

Die erfindungsgemäße Umsetzung wird bevorzugt bei Temperaturen von 20 bis 120 ° C, besonders bevorzugt 40 bis 80 ° C, ausgeführt.

In einer Ausführungsform des erfindungsgemäßen Verfahrens wird die Verbindung der allgemeinen Formel II im Lösungsmittel zusammen mit Wasser und gegebenenfalls Säure vorgelegt und die Nitrosylgruppen liefernde Verbindung zugesetzt. In einer anderen Ausführungsform wird die Verbindung der allgemeinen Formel II im Lösungsmittel zusammen mit Wasser und Alkalinitrit vorgelegt und Säure Zugesetzt.

In einer weiteren, bevorzugten Ausführungsform des erfindungsgemäßen Verfahrens werden zunächst die Verbindungen der allgemeinen Formel II durch Umsetzung von 2-Aminothiophenolen der allgemeinen Formel III

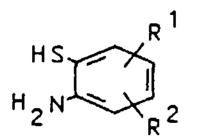

III

worin $R^1$ und $R^2$ wie oben definiert sind, mit 3-Halogenbenzanthronen der allgemeinen Formel IV

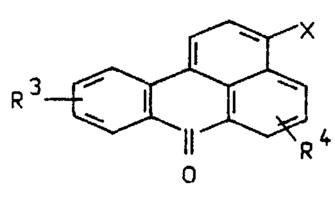

IV

worin X Chlor oder Brom bedeutet und $R^3$ und $R^4$ wie oben definiert sind, in polaren aprotischen Lösungsmitteln hergestellt und diese ohne zwischenisolierung erfindungsgemäß diazotiert und cyclisiert.

Die Verbindungen der allgemeinen Formeln III und IV sind bekannt und können nach bekannten Methoden hergestellt werden.

Das erfindungsgemäße Verfahren, bei dem überraschenderweise auf den Zusatz von Kupfer, Kupfersalzen oder säurebindenden Mitteln verzichtet werden kann, liefert die Benzothioxanthen-Farbstoffe der allgemeinen Formel I in überraschend hoher Ausbeute von bis zu 95% der Theorie bezogen auf die Verbindung der allgemeinen Formel II und in sehr guter Reinheit. Eine hohe Reinheit ist für den Einsatz als Fluoreszenzfarbstoffe für synthetische Fasern und Kunststoffe unbedingt erforderlich. Somit bietet das erfindungsgemäße Verfahren im Vergleich zu den bisher bekannten Verfahren deutliche ökologische und ökonomische Vorteile.

Weiterhin ergeben sich auch unter Sicherheitstechnischen Aspekten erhebliche Vorteile. Der Wärmefluß der Reaktion ist wesentlich besser zu beherrschen als bei den bekannten Reaktionen. Die adiabatische Temperaturerhöhung beträgt für die Gesamtreaktion lediglich 61,3 °C.

Es war ferner nicht vorhersehbar, daß die intermediär entstehenden Diazoniumsalze der Verbindung der allgemeinen Formel II in Gegenwart von Wasser bessere Ausbeuten an Cyclisierungsprodukt der allgemeinen Formel I liefern als in wasserfreiem Medium gemäß den bekannten Verfahren. Aufgrund des Standes der Technik hätte man nämlich erwartet, daß durch Verkochung der Diazoniumsalze Phenole entstehen (siehe z.B. Houben-Weyl, Methoden der Organischen Chemie, Bd. VI/1c Seite 247 (1976); Ullmanns Enzyklopädie der Technischen Chemie, Bd V, Seite 812 (1954).

Beispiel 1

70,6 g 3-(2'-Aminophenylthio)-benzanthron werden in 700 g N-Methylpyrrolidon 99%ig eingetragen und bei 25 °C mit 20,7 g Natriumnitrit und 32,0 g Wasser versetzt. Anschließend heizt man auf 45 °C und gibt im Verlauf von 3 Stunden 25,0 g Methansulfonsäure zu. Die Reaktion wird durch Nachrühren bei 70 ° bis zum Ende der Stickstoffentwicklung vervollständigt.

Man kühlt auf 10°, filtriert und wäscht den Filterkuchen mit 150 g N-Methylpyrrolidon und 400 g Wasser nach.

Nach Trocknung bei 110°C erhält man 59,7 g (87% der Theorie) des roten Farbstoffs der Formel I ($R^1$ bis $R^4$ = H) mit einem Reinheitsgrad von 98 % (Extinktionsmessung bei λmax: 510 µm).

Beispiel 2

Eine Mischung von 70,6 g 3-(2'-Aminophenylthio)benzanthron, 25,0 g Methansulfonsäure, 20 g Wasser und 700 g N-Methylpyrrolidon 99%ig werden bei 45 ° in 3 Stunden mit einer Lösung von 21,6 g Natriumnitrit in 35 g Wasser versetzt und anschließend auf 90 ° geheizt. Nach dem Abkühlen auf 10 °C und Aufarbeitung analog Beispiel 1 erhält man 58,3 g (84 % der Theorie) des Farbstoffs der Formel I ($R^1$ bis $R^4$ = H) mit einem Reinheitsgrad von 97 % (λmax: 510 µm).

Verfährt man nach den Angaben des Beispiels 1, ersetzt jedoch Methansulfonsäure durch die in Spalte 2 der Tabelle 1 angegebenen Säuren und N-Methylpyrrolidon durch die in Spalte 3 angegebenen Lösungsmittel, so erhält man den Farbstoff der Formel I ($R^1$ bis $R^4$ = H) ebenfalls in einer hohen Ausbeute und mit einem Reinheitsgrad von 95 -100%.

Tabelle 1

| Beispiel | Säure | polares, aprotisches Lösungsmittel | Ausbeute (% d.Th.) |
|---|---|---|---|
| 3 | 25,0 g Schwefelsäure 96 %ig | N-Methylpyrrolidon-2 | 83 |
| 4 | 29,6 g Phosphorsäure 85 %ig | N-Methylpyrrolidon | 80 |
| 5 | 48,2 g 4-Methylbenzolsulfonsäure | N-Methylpyrrolidon | 79 |
| 6 | 30,2 g Salzsäure 32 %ig | 1,3-Dimethylimidazolinon-2 | 76 |
| 7 | 30,2 g Salzsäure 32 %ig | Sulfolan | 75 |
| 8 | 25,0 g Methansulfonsäure | Dimethylformamid | 77 |
| 9 | 25,0 g Methansulfonsäure | Dimethylacetamid | 79 |
| 10 | 25,0 g Methansulfonsäure | Tetramethylharnstoff | 84 |
| 11 | 30,2 g Salzsäure 32 %ig | Acetonitril | 77 |
| 12 | 25,0 g Methansulfonsäure | Tetraethylharnstoff | 81 |
| 13 | 25,0 g Methansulfonsäure | 1,3-Dimethyl-3,4,5,6-tetrahydro-2-(1H)-pyrimidon | 75 |
| 14 | 30,2 g Salzsäure 32 %ig | Dimethylsulfoxid | 95 |

Beispiel 15

Eine Lösung von 63,2 g 2-Aminothiophenol in 400 g N-Methylpyrrolidon-2 99%ig wird mit 20,5 g gemahlenem Natriumhydroxid versetzt und unter Stickstoffatmosphäre 1 Stunde bei 60 °C gerührt. Anschließend wird eine Lösung von 154,6 g 3-Brombenzanthron in 850 g N-Methylpyrrolidon 99%ig zugegeben und die Kondensationsreaktion durch Nachrühren bei 80 °C vervollständigt.

Anschließend werden 58,0 g Wasser und 51,75 g Natriumnitrit zugegeben und bei 50 °C langsam 75,4 g Salzsäure 32 %ig zudosiert. Zur Vervollständigung der Cyclisierungsreaktion rührt man 3 Stunden bei 70 ° nach, kühlt auf 5 °C, filtriert und wäscht den Presskuchen mit 700 g N-Methylpyrrolidon-2 und 2,0 l Wasser nach. Die Farbstoffpaste wird bei 110 °C getrocknet.
Ausbeute: 135,9 g (80 % der Theorie) rotes Pulver des Farbstoffs der Formel I ($R^1$ bis $R^4$ = H)
Reinheitsgrad: 99 % (Extinktionsmessung bei λmax: 510 µm).

Durch Wärmebilanzkalorimetrie (Mettler RC-1 Kalorimeter) wird die adiabatische Temperaturerhöhung der Reaktion bestimmt. Für die mittleren Reaktionsschritte ergeben sich folgende Werte:

| | adiabatische Temperaturerhöhung (°C) |
|---|---|
| Salzsäure - Zugabe | 41,4 |
| Erwärmen auf 70 ° und Nachrühren bei 70° | 21,8 |
| Gesamtreaktion | 61,3 |

Vergleichsbeispiel
(entsprechend Beispiel 2 der DE-PS 2 134 518)

106,0 g 3-(2'-Aminophenylthio)-benzanthron werden bei 25 °C in 720 g N-Methylpyrrolidon 99 %ig eingetragen, auf - 5 ° gekühlt und bei - 5 ° bis 0 °C in 1 Stunde mit 114,9 g Nitrosylschwefelsäure 40,5 %ig versetzt.

Dann entfernt man die Kühlung, erwärmt in 30 Minuten auf 23 °C und rührt 3 Stunden bei 23 °C nach. Anschließend wird die Mischung in 1 Stunde auf 110 °C geheizt und 3 Stunden bei 110 ° nachgerührt. Dann kühlt man auf 5 °C, filtriert und wäscht den Filterkuchen mit 420 g N-Methylpyrrolidon-2 und 1,4 l Wasser nach. Nach Trocknung bei 110 °C erhält man 57,6 g (56 % der Theorie) des Farbstoffs der Formel I ($R^1$ bis $R^4$ = H) mit einem Reingehalt von 98 % (Extinktionsmessung bei λmax: 510 µm).

Durch Wärmebilanzkalorimetrie (Mettler RC 1-Kalorimeter) wird die adiabatische Temperaturerhöhung der Reaktion gemessen. Für die einzelnen Reaktionsschritte ergeben sich folgende Werte:

| | adiabatische Temperaturerhöhung (°C) |
|---|---|
| Zugabe Nitrosylschwefelsäure | 22,2 |
| Nachrühren bei 23 °C | 44,3 |
| Erwärmen auf 110 °C und Nachrühren (3h) bei 110 °C | 57,9 |
| Gesamtreaktion | 106,2 |

Bei 60 °C ist ein exponentieller Anstieg des Wärmeflusses festzustellen.

Verfährt man nach den Angaben des Beispiels 16, setzt jedoch statt 2-Aminothiophenol die in Tabelle 2, Spalte 2 angegebenen substituierten 2-Aminothiophenole und das in Spalte 3 angegebene Benzanthron-Derivat ein, so erhält man die in Spalte 4 angegebenen substituierten Farbstoffe der Formel I in einer Ausbeute von 75-80 % der Theorie und mit hohem Reinheitsgrad von > 95 %.

Tabelle 2

| Beispiel | 2-Aminothiophenol der Formel III | Benzanthron der Formel IV | Benzothioxanthen-Farbstoff der Formel I |
|---|---|---|---|
| 16 | 2-Aminothiophenol | 3,9-Dibrombenzanthron | 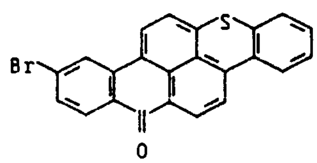 |
| 17 | 2-Amino-5-ethoxy-thiophenol | 3-Brombenzanthron | 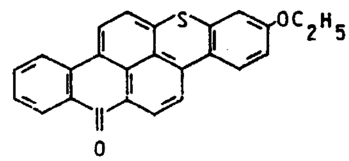 |
| 18 | 2-Amino-5-chlor-3-methylthiophenol | 3-Brombenzanthron | 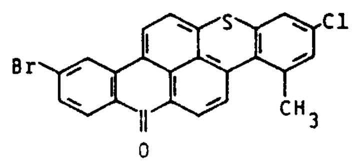 |

## Patentansprüche

**1.** Verfahren zur Herstellung von Benzothioxanthen-Farbstoffen der allgemeinen Formel I

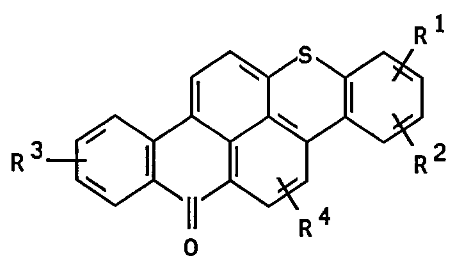

I

worin
$R^1$ und $R^2$ unabhängig voneinander Wasserstoff, $(C_1-C_2)$-Alkyl, $(C_1-C_2)$-Alkoxy oder Chlor
und
$R^3$ und $R^4$ unabhängig voneinander Wasserstoff oder Brom bedeuten, durch Diazotierung und Cyclisierung von 3-(2'-Aminophenylthio)-benzanthronen der allgemeinen Formel II

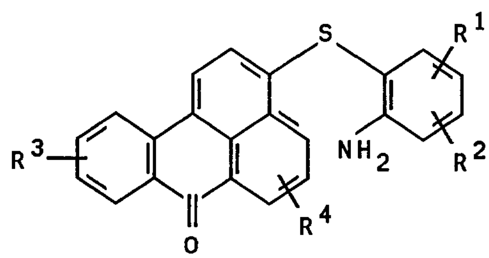

II

worin $R^1$ bis $R^4$ wie oben angegeben definiert sind, dadurch gekennzeichnet, daß Diazotierung und Cyclisierung gleichzeitig in polaren, aprotischen Lösungsmitteln in Gegenwart von Wasser und ohne Zusatz von Kupferverbindungen ausgeführt werden.

**2.** Verfahren nach Anspruch 1, dadurch gekennzeichnet, daß in der allgemeinen Formel I $R^1$ bis $R^4$ Wasserstoff bedeuten.

**3.** Verfahren nach Anspruch 1 und/oder 2, dadurch gekennzeichnet, daß als polare, aprotische Lösungsmittel dialkylierte Säureamide, Harnstoffderivate, Sulfoxide, Sulfone oder Alkylnitrile eingesetzt werden.

**4.** Verfahren nach einem oder mehreren der Ansprüche 1 bis 3, dadurch gekennzeichnet, daß als polares, aprotisches Lösungsmittel N-Methylpyrrolidon-2 eingesetzt wird.

**5.** Verfahren nach einem oder mehreren der Ansprüche 1 bis 3, dadurch gekennzeichnet, daß als polares, aprotisches Lösungsmittel Dimethylsulfoxid eingesetzt wird.

**6.** Verfahren nach einem oder mehreren der Ansprüche 1 bis 5, dadurch gekennzeichnet, daß Wasser in Mengen von 0,5 bis 15 Gew.%, vorzugsweise 2 bis 10 Gew.%, bezogen auf das Lösungsmittel eingesetzt werden.

**7.** Verfahren nach einem oder mehreren der Ansprüche 1 bis 6, dadurch gekennzeichnet, daß man die Reaktion bei Temperaturen von 20 bis 120 ° C, vorzugsweise 40 bis 80 ° C, ausführt.

**8.** Verfahren nach einem oder mehreren der Ansprüche 1 bis 7, dadurch gekennzeichnet, daß man die Verbindung der allgemeinen Formel II im Lösungsmittel zusammen mit Wasser und gegebenenfalls Säure vorlegt und die Nitrosylgruppen liefernde Verbindung zusetzt.

**9.** Verfahren nach einem oder mehreren der Ansprüche 1 bis 7, dadurch gekennzeichnet, daß man die Verbindung der allgemeinen Formel II im Lösungsmittel zusammen mit Wasser und Alkalinitrit vorlegt und Säure zusetzt.

**10.** Verfahren nach einem oder mehreren der Ansprüche 1 bis 9, dadurch gekennzeichnet, daß man zunächst die Verbindungen der allgemeinen Formel II durch Umsetzung von 2-Aminothiophenolen der allgemeinen Formel III

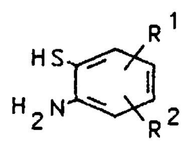

III

worin $R^1$ und $R^2$ wie in Anspruch 1 definiert sind, mit 3-Halogen-benzanthronen der allgemeinen Formel IV

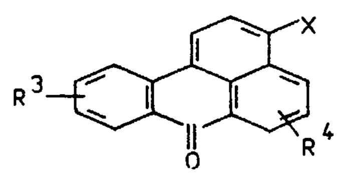

IV

worin X Chlor oder Brom bedeutet und $R^3$ und $R^4$ wie in Anspruch 1 definiert sind, in polaren aprotischen Lösungsmitteln herstellt und diese ohne Zwischenisolierung diazotiert und cyclisiert.

## Claims

1. Process for the preparation of benzothioxanthene dyestuffs of the general formula I

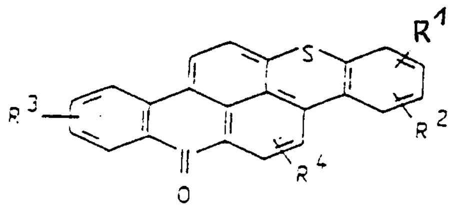

I

wherein
$R^1$ and $R^2$ independently of one another denote hydrogen, $(C_1\text{-}C_2)$-alkyl, $(C_1\text{-}C_2)$-alkoxy or chlorine and
$R^3$ and $R^4$ independently of one another denote hydrogen or bromine, by diazotisation and cyclisation of 3-(2'-aminophenylthio)-benzanthrones of the general formula II

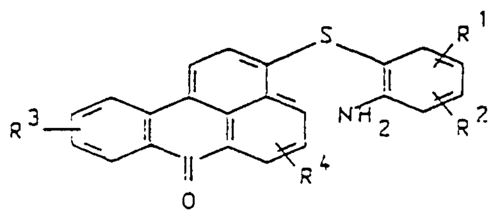

II

wherein $R^1$ to $R^4$ are defined as mentioned above, characterised in that the diazotisation and cyclisation are carried out simultaneously in polar, aprotic solvents in the presence of water and without the addition of copper compounds.

2. Process according to Claim 1, characterised in that $R^1$ to $R^4$ in the general formula I denote hydrogen.

3. Process according to Claim 1 and/or 2, characterised in that dialkylated acid amides, urea derivatives, sulphoxides, sulphones or alkylnitriles are employed as the polar, aprotic solvents.

4. Process according to one or more of Claims 1 to 3, characterised in that N-methylpyrrolid-2-one is employed as the polar, aprotic solvent.

5. Process according to one or more of Claims 1 to 3, characterised in that dimethylsulphoxide is employed as the polar, aprotic solvent.

6. Process according to one or more of Claims 1 to 5, characterised in that water is employed in amounts of 0.5 to 15 % by weight, preferably 2 to 10 % by weight, based on the solvent.

7. Process according to one or more of Claims 1 to 6, characterised in that the reaction is carried out at temperatures from 20 to 120 ° C, preferably 40 to 80 ° C.

8. Process according to one or more of Claims 1 to 7, characterised in that the compound of the general formula II is initially introduced into the reaction vessel in the solvent, together with water and if appropriate acid, and the compound which supplies nitrosyl groups is added.

9. Process according to one or more of Claims 1 to 7, characterised in that the compound of the general formula II is initially introduced into the reaction vessel in the solvent, together with water and an alkali metal nitrite, and an acid is added.

10. Process according to one or more of Claims 1 to 9, characterised in that the compounds of the general formula II are first prepared by reaction of 2-aminothiophenols of the general formula III

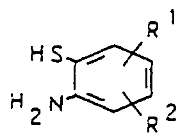

III

wherein $R^1$ and $R^2$ are as defined in Claim 1, with 3-halogeno-benzanthrones of the general formula IV

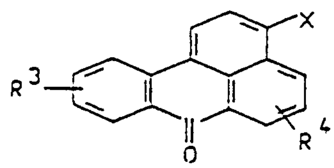

IV

wherein X denotes chlorine or bromine and $R^3$ and $R^4$ are as defined in Claim 1, in polar, aprotic solvents, and these products are diazotised and cyclised without intermediate isolation.

## Revendications

**1.** Procédé de préparation de colorants de type benzothioxanthène de formule générale I

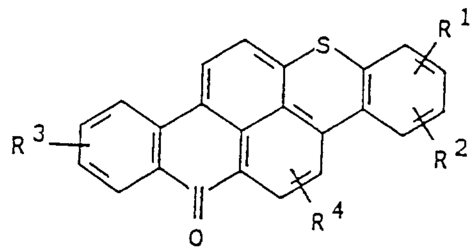

I

dans laquelle

$R^1$ et $R^2$ signifient, indépendamment l'un de l'autre, un hydrogène, un alkyle en $C_1$ ou $C_2$, un alcoxy en $C_1$ ou $C_2$ ou un chlore et

$R^3$ et $R^4$ signifient, indépendamment l'un de l'autre, un hydrogène ou un brome, par réaction de diazotation et de cyclisation de 3-(2'-aminophénylthio)-benzanthrones de formule générale II

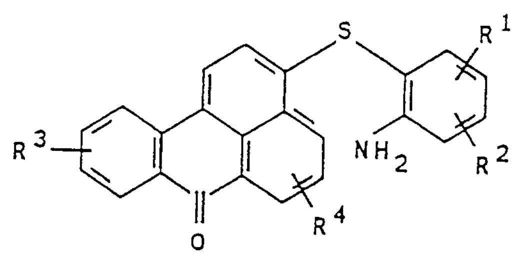

II

dans laquelle les radicaux $R^1$ à $R^4$ sont définis comme indiqué ci-dessus, caractérisé en ce que les réactions de diazotation et de cyclisation se font simultanément dans un solvant aprotique polaire en présence d'eau.

**2.** Procédé selon la revendication 1, caractérisé en ce que les radicaux $R^1$ à $R^4$ de la formule générale I signifient un hydrogène.

**3.** Procédé selon la revendication 1 et/ou 2, caractérisé en ce que on utilise en tant que solvants aprotiques polaires des amides d'acides dialkylés, des dérivés de l'urée, des sulfoxydes, des sulfones ou des alkylnitriles.

**4.** Procédé selon l'une ou plusieurs des revendications 1 à 3, caractérisé en ce que on utilise en tant que solvant aprotique polaire la N-méthylpyrrolidone-2.

**5.** Procédé selon l'une ou plusieurs des revendications 1 à 3, caractérisé en ce que on utilise en tant que solvant aprotique polaire le diméthylsulfoxyde.

**6.** Procédé selon l'une ou plusieurs des revendications 1 à 5, caractérisé en ce que on utilise de l'eau en quantité comprise entre 0,5 et 15% en poids, rapporté au solvant, de préférence entre 2 et 10% en poids.

**7.** Procédé selon l'une ou plusieurs des revendications 1 à 6, caractérisé en ce que on réalise la réaction à une température comprise entre 20 et 120 ° C, de préférence entre 40 et 80 ° .

**8.** Procédé selon l'une ou plusieurs des revendications 1 à 7, caractérisé en ce que les composés de formule générale II sont placés dans un solvant avec de l'eau et éventuellement un acide et on introduit un composé générant des groupes nitrosyles.

**9.** Procédé selon l'une ou plusieurs des revendications 1 à 7, caractérisé en ce que l'on place le composé de formule générale II dans un solvant avec de l'eau et un nitrite alcalin et on introduit un acide.

**10.** Procédé selon l'une ou plusieurs des revendications 1 à 9, caractérisé en ce que l'on prépare ensuite le composé de formule générale II par réaction avec le 2-amino-thiophénol de formule générale III

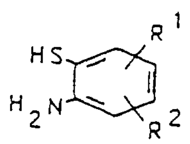

III

dans laquelle $R^1$ et $R^2$ sont définis comme ci-dessus, avec une 3-halogéno-benzanthrone de formule générale IV

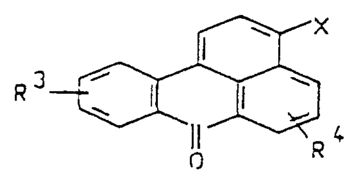

IV

dans laquelle
X signifie un chlore ou un brome et
$R^3$ et $R^4$ sont définis comme ci-dessus,
dans un solvant aprotique polaire et celui-ci est diazoté conformément à l'invention sans isolation intermédiaire et est cyclisé.